# EUROPÄISCHE PATENTSCHRIFT

(11) **EP 1 984 378 B1**
(45) Veröffentlichungstag und Bekanntmachung des Hinweises auf die Patenterteilung: **28.07.2010**
(21) Anmeldenummer: 07712171.3
(22) Anmeldetag: 08.02.2007
(51) Int. Cl.: C07F 3/00, C07F 19/00

(54) **VERFAHREN ZUR HERSTELLUNG PORÖSER ORGANISCHER GERÜSTMATERIALIEN**
PROCESS FOR PREPARING POROUS ORGANIC FRAMEWORK MATERIALS
PROCEDE DE FABRICATION D'UN MATERIAU DE CHASSIS ORGANIQUE POREUX

(30) Priorität: 10.02.2006 EP 06101535
(43) Veröffentlichungstag der Anmeldung: 29.10.2008
(73) Patentinhaber: BASF SE, 67056 Ludwigshafen (DE)
(72) Erfinder: SCHUBERT, Markus, 67063 Ludwigshafen (DE); MÜLLER, Ulrich, 67435 Neustadt (DE); MATTENHEIMER, Hendrick, 67063 Ludwigshafen (DE)
(86) Internationale Anmeldenummer: PCT/EP2007/051211
(87) Internationale Veröffentlichungsnummer: WO 2007/090864

(56) Entgegenhaltungen:
- WO-A1-02/088148

## Beschreibung

Die vorliegende Erfindung betrifft Verfahren zur Herstellung poröser organischer Gerüstmaterialien.

Poröse organische Gerüstmaterialien bilden eine interessante Substanzklasse, die für verschiedenste Anwendungen eine Alternative zu anorganischen Zeolithen sein können.

Solche Anwendungen liegen zum Beispiel, auf dem Gebiet der Speicherung, Abtrennung oder kontrollierten Abgabe chemischer Stoffe, wie beispielsweise von Gasen, oder auf dem Gebiet der Katalyse. Hierbei spielt insbesondere die Porosität des organischen Materials eine ausschlaggebende Rolle. Durch die in dem organischen Gerüstmaterial in definierter Form vorhandenen Poren wird zum einen die spezifische Oberfläche des Materials erhöht und eine selektive Abtrennung von Gemischen ermöglicht. Gleiches gilt für solche Materialien, wenn diese bei chemischen Umsetzungen, beispielsweise bei katalytischen Reaktionen, als Trägermaterial eingesetzt werden.

Eine spezielle Gruppe dieser porösen organischen Gerüstmaterialien sind die so genannten metallorganischen Gerüstmaterialien. Diese sind im Stand der Technik bekannt und enthalten typischerweise mindestens eine an ein Metallion koordinativ gebundene mindestens zweizähnige organische Verbindung. Solche metallorganischen Gerüstmaterialien (MOF = metal organic framework) werden beispielsweise in US-A 5,648,508, EP-A 0 790 253, M.O. Keeffe, J. Sol. State Chem., 152 (2000), 3-20; H.Li et al., Nature 402 (1999), 276; M. Eddaoudi, Topics in catalysis 9 (1999), 105-111; B. Chen et al., Science 291 (2001), 1021-1023 und DE-A 101 11 230 beschrieben.

Als eine spezielle Gruppe dieser metallorganischen Gerüstmaterialien werden in der jüngsten Literatur so genannte "beschränkte" Gerüstmaterialien beschrieben, bei denen das Gerüst durch spezielle Wahl der organischen Verbindung sich nicht unendlich sondern unter Ausbildung von Polyedern erstreckt. A.C. Sudik, et al., J. Am. Chem. Soc. 127 (2005), 7110-7118, beschreiben solche speziellen Gerüstmaterialien. Hierbei werden diese zur Abgrenzung als metallorganische Polyeder (MOP = Metal-Organic Polyhedra) genannt.

Eine weitere Abwandlung solcher poröser organischer Gerüstmaterialien stellen die so genannten kovalenten organischen Gerüste (COF = Covalent Organic Framework) dar. Hierbei handelt es sich um Gerüstmaterialien, bei denen im Vergleich zu den metallorganischen Gerüstmaterialien das Metallzentralatom durch eine organische Borverbindung ersetzt wird, die vorzugsweise mindestens zwei Borongruppen (R-B(OH)₂, wobei R einen organischen Rest darstellt) ausgetauscht wird. A.P. Côté, et al. Science 310 (2005), 1116-1170, beschreiben beispielsweise solche Gerüstmaterialien.

All diesen organischen Gerüstmaterialien ist deren Porosität gemein. Eng verknüpft mit der Porosität solcher Materialien ist deren spezifische Oberfläche, welche deren Eigenschaften stark beeinflusst. Als ein Maß für die Charakterisierung solcher Oberflächen ist die spezifische Oberfläche nach Langmuir anzusehen.

Es ist daher bei der Herstellung solcher Materialien neben einer guten Ausbeute auch die Erzeugung hoher spezifischer Oberflächen sowie die Reproduzierbarkeit bei der Herstellung von großer Bedeutung. Dies gilt insbesondere bei der Herstellung großer Mengen an Gerüstmaterial.

Es sind beispielsweise für metallorganische Gerüstmaterialien wie MOF-5 (IRMOF-1) zahlreiche Synthesevorschriften in der Literatur beschrieben.

So beschreibt beispielsweise H. Li, et al., Nature 402 (1999), 276-279 die Synthese von MOF-5 wobei eine Langmuir Oberfläche von etwa 2900 m²/g erzielt werden konnte.

In WO-A 02/070526 wurden beispielsweise spezielle Lösemittel verwendet, um MOF-5 herzustellen. Hierbei hat sich eine spezifische Oberfläche von 1063 m²/g ergeben.

Auch in WO-A 02/088148 werden verschiedene Methoden zur Herstellung von IRMOF-1 (MOF-5) offenbart.

Die Herstellung von MOF-5, bei der eine besonders hohe spezifische Oberfläche erzielt werden konnte, ist in WO-A 03/102000 sowie von J.L.C. Rowsell, et al., J. Am. Chem. Soc. 126 (2004), 5666-5667 beschrieben.

All diese Literaturstellen zeigen, dass trotz prinzipieller gleicher Reaktionsführungen poröse organische Gerüstmaterialien erhalten werden, die stark unterschiedliche spezifische Oberflächen aufweisen und somit unterschiedliche Eigenschaften haben können.

Es besteht daher ein Bedarf, Herstellverfahren bereitzustellen, die insbesondere bei der Herstellung größerer Mengen von porösen organischen Gerüstmaterialien die oben beschriebenen Nachteile vermeiden.

Eine Aufgabe der vorliegenden Erfindung liegt somit darin, Verfahren zur Herstellung poröser organischer Gerüstmaterialien bereitzustellen, die ausreichend große Mengen an solchen Gerüstmaterialien liefern, wobei diese eine möglichst hohe spezifische Oberfläche aufweisen und mit einer hohen Reproduzierbarkeit hergestellt werden können.

Die Aufgabe wird gelöst durch ein Verfahren zur Herstellung eines porösen metallorganischen gegebenenfalls beschränkten Gerüstmaterials den Schritt enthaltend:
Umsetzung eines Reaktionsgemisches in einer Flüssigphase aus mindestens einer Metallverbindung mit mindestens einer mindestens zweizähnigen organischen Verbindung, die koordinativ an das Metall binden kann, in Gegenwart eines nicht-wässrigen organischen Lösemittels in Anwesenheit und/oder unter Freisetzung von Wasser, wobei die organische Verbindung zumindest zwei Atome jeweils unabhängig voneinander ausgewählt aus der Gruppe bestehend aus Sauerstoff, Schwefel und Stickstoff aufweist, über die die organische Verbindung an das Metall koordinativ binden kann, dadurch gekennzeichnet, dass während der Umsetzung der Flüssigphase des Reaktionsgemisches Wasser entzogen wird.

Die Aufgabe wird weiterhin gelöst durch ein Verfahren zur Herstellung eines porösen Bor-organischen gegebenenfalls beschränkten Gerüstmaterials den Schritt enthaltend:
Umsetzung eines Reaktionsgemisches in einer Flüssigphase aus mindestens einer mindestens zwei Borongruppen aufweisenden Verbindung mit mindestens einer mindestens bifunktionellen organischen Verbindung, die kovalent an eine Borongruppe binden kann, in Gegenwart eines nicht-wässrigen organischen Lösemittels, wobei die mindestens bifunktionelle organische Verbindung zumindest zwei Atome jeweils unabhängig voneinander ausgewählt aus der Gruppe bestehend aus Sauerstoff, Schwefel und Stickstoff aufweist, über die die bifunktionelle organische Verbindung an eine Borongruppe kovalent binden kann, dadurch gekennzeichnet, dass während der Umsetzung der Flüssigphase des Reaktionsgemisches Wasser entzogen wird.

Es wurde nämlich überraschend gefunden, dass die oben beschriebenen porösen organischen Gerüstmaterialien (MOF, MOP, COF) mit vergleichsweise hohen spezifischen Oberflächen und gut reproduzierbaren Werten, bei denen eine geringere Standardabweichung als im Stand der Technik auftritt, dadurch erzeugt werden können, dass dem Reaktionsgemisch bei der Bildung der porösen organischen Gerüstmaterialien Wasser entzogen wird.

Im Falle metallorganischer Gerüstmaterialien kann dieses Wasser in Form von Kristallwasser der Metallverbindung im Reaktionsgemisch vorhanden sein. Nach Umsetzung der Metallverbindung befindet sich das nicht mehr koordinativ gebundene Kristallwasser in dem Reaktionsgemisch und kann diesem entzogen werden. Weiterhin besteht die Möglichkeit, dass nicht völlig wasserfreie organische Lösemittel eingesetzt werden. Auch hier kann das dadurch im Reaktionsgemisch vorhandene Wasser diesem entzogen werden. Schließlich kann auch bei der Umsetzung selbst Wasser entstehen. Dies trifft beispielsweise dann zu, wenn die Metallverbindung in Form eines Metallhydroxids oder eines Metalloxids im Reaktionsgemisch vorliegt und eine Umsetzung mit der mindestens zweizähnigen organischen Verbindung, welches beispielsweise eine organische Carbonsäure sein kann, erfolgt. Hier wird durch die Ausbildung der Metallkomplexverbindung Wasser freigesetzt. Dabei muss die Metallverbindung nicht dem Reaktionsgemisch als Hydroxid oder Oxid hinzugefügt werden. Vielmehr kann dieses auch in Form eines Metallsalzes vorliegen, wobei die erforderlichen Hydroxidionen zur Bildung des Wassers durch Zugabe einer Base, wie beispielsweise Natronlauge, oder durch das Lösemittel erzeugt werden können.

Im Falle der Bor-organischen Gerüstmaterialien wird insbesondere dadurch Wasser erzeugt, dass die Boronsäure beispielsweise mit einem Alkohol umgesetzt wird.

Das Entfernen des Wassers aus dem Reaktionsgemisch kann insbesondere destillativ, durch Strippen oder durch Adsorptionsmittel erfolgen. Geeignete Adsorptionsmittel sind beispielsweise Aluminiumoxid, Kieselgel oder ein Molsieb, insbesondere ein 3 Å oder 4 Å Molsieb.

Beim Strippen (oder Austreiben genannt) werden aus einer Flüssigphase Inhaltsstoffe dieser Flüssigphase durch das Durchleiten von Gasen aus der Flüssigphase entfernt und in eine Gasphase überführt.

Es ist unter anderem vorteilhaft, wenn die Umsetzung unter Rühren stattfinden kann, was auch bei einem Scale-up vorteilhaft ist. Dadurch können pro Reaktion größere Mengen an gewünschtem porösen organischen Gerüstmaterial erhalten werden.

Es ist bevorzugt, dass die Umsetzung bei einem Druck von höchstens 2 bar (absolut) erfolgt. Weiterhin bevorzugt beträgt der Druck jedoch höchstens 1200 mbar (absolut). Insbesondere bevorzugt findet die Umsetzung bei Atmosphärendruck statt.

Die Umsetzung kann bei Raumtemperatur oder erhöhter Temperatur durchgeführt werden. Vorzugsweise erfolgt die Umsetzung jedoch bei einer Reaktionstemperatur im

Bereich von 80°C bis 180°C. Weiterhin bevorzugt ist eine Reaktionstemperatur von 100°C bis 150°C.

Bei der Metallverbindung kann es sich wie oben ausgeführt um ein Metallsalz handeln. Beispiele solcher Salze sind Nitrate, Sulfate, Chloride, Fluoride, Jodide, Hydroxide, Oxide oder Alkoxylate. Je nach verwendetem Metall liegen solche Verbindungen als Hydrate vor. Als Beispiel sei Zinknitrat genannt, das sowohl als Tetra- als auch als Hexahydrat kommerziell erhältlich ist.

Die metallorganischen Gerüstmaterialien gemäß der vorliegenden Erfindung enthalten Poren, insbesondere Mikro- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie Pure & Applied Chem. 57 (1985), 603 - 619, insbesondere auf Seite 606 (1976) angegeben ist. Die Anwesenheit von Mikro- und/oder Mesoporen kann mit Hilfe von Sorptionsmessungen überprüft werden, wobei diese Messungen die Aufnahmekapazität der MOF für Stickstoff bei 77 Kelvin gemäß DIN 66131 und/oder DIN 66134 bestimmt.

Vorzugsweise beträgt die spezifische Oberfläche - berechnet nach dem Langmuir-Modell gemäß DIN 66135 (DIN 66131, 66134) für ein MOF in Pulverform mehr als 5 m²/g, mehr bevorzugt über 10 m²/g, mehr bevorzugt mehr als 50 m²/g, weiter mehr bevorzugt mehr als 500 m²/g, weiter mehr bevorzugt mehr als 1000 m²/g und besonders bevorzugt mehr als 1500 m²/g.

MOF Formkörper können eine niedrigere spezifische Oberfläche besitzen; vorzugsweise jedoch mehr als 10 m²/g, mehr bevorzugt mehr als 50 m²/g, weiter mehr bevorzugt mehr als 500 m²/g.

Die Metallkomponente im Gerüstmaterial ist vorzugsweise ausgewählt aus den Gruppen Ia, IIa, IIIa, IVa bis VIIIa und Ib bis Vlb. Besonders bevorzugt sind Mg, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, B, Al, Ga, In, Tl, Si, Ge, Sn, Pb, As, Sb und Bi. Mehr bevorzugt sind Zn, Al, Mg, Ca, Cu, Ni, Fe, Pd, Pt, Ru, Rh, Co, Zr und Ti. Insbesondere bevorzugt sind Zn, Al, Ni, Cu, Mg, Ca, Fe. In Bezug auf die Ionen dieser Elemente sind besonders zu erwähnen Mg²⁺, Ca²⁺, Sr²⁺, Ba²⁺, Sc³⁺, Y³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺ Ga3⁺, In³⁺, Tl³⁺, Si⁴⁺, Si²⁺, Ge4⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ und Bi⁺.

Die mindestens eine mindestens zweizähnige organische Verbindung weist zumindest zwei Atome auf, die jeweils unabhängig ausgewählt sind aus der Gruppe bestehend aus Sauerstoff, Schwefel und Stickstoff, über die die organische Verbindung an das Metall koordinativ binden kann. Diese Atome können Teil des Gerüsts der organischen Verbindung oder funktioneller Gruppen sein.

Als funktionelle Gruppen, über die die genannten koordinativen Bindungen ausgebildet werden kann, sind insbesondere beispielsweise folgende funktionellen Gruppen zu nennen: OH, SH, NH₂, NH(-R-H), N(R-H)₂, CH₂OH, CH₂SH, CH₂NH₂, CH₂NH(-R-H), CH₂N(-R-H)₂, -CO₂H, COSH, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H₂, -AsO₃H, -AsO₄H, -P(SH)₃, -As(SH)₃, -CH(RSH)₂, -C(RSH)₃, -CH(RNH₂)₂, -C(RNH₂)₃, -CH(ROH)₂, -C(ROH)₃, -CH(RCN)₂, - C(RCN)₃, wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen-, n-Butylen-, i-Butylen-, tert-Butylen- oder n-Pentylengruppe, oder eine Arylgruppe, enthaltend 1 oder 2 aromatische Kerne wie beispielsweise 2 C₆-Ringe, die gegebenenfalls kondensiert sein können und unabhängig voneinander mit mindestes jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugter Ausführungsformen sind funktionelle Gruppen zu nennen, bei denen der oben genannte Rest R nicht vorhanden ist. Diesbezüglich sind unter anderem -CH(SH)₂, -C(SH)₃, -CH(NH₂)₂, CH(NH(R-H))₂, CH(N(R-H)₂)₂, C(NH(R-H))₃, C(N(R-H)₂)₃, -C(NH₂)₃, -CH(OH)₂, -C(OH)₃, -CH(CN)₂, - C(CN)_{3 z}u nennen.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 18, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, bevorzugt N, O und/oder S enthalten. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander oder in kondensierter Form vorliegen. Insbesondere sind als aromatische Verbindungen Benzol, Naphthalin und/oder Biphenyl und/oder Bipyridyl und/oder Pyridyl zu nennen.

Besonders bevorzugt leitet sich die mindestens zweizähnige organische Verbindung von einer Di-, Tri-, oder Tetracarbonsäure oder deren Schwefelanaloga ab. Schwefelanaloga sind die funktionellen Gruppen -C(=O)SH sowie dessen Tautomer und C(=S)SH, die anstelle einer oder mehrerer Carbonsäuregruppen eingesetzt werden können.

Der Begriff "ableiten" bedeutet im Rahmen der vorliegenden Erfindung, dass die mindestens zweizähnige organische Verbindung im Gerüstmaterial in teilweise deprotonierter oder vollständig deprotonierter Form vorliegen kann. Weiterhin kann die mindestens zweizähnige organische Verbindung weitere Substituenten enthalten, wie beispielsweise -OH, -NH₂, -OCH₃, -CH₃, -NH(CH₃), -N(CH₃)₂, -CN sowie Halogenide.

Mehr bevorzugt ist die mindestens zweizähnige organische Verbindung ein aliphatischer oder aromatischer acyclischer oder cyclischer Kohlenwasserstoff mit 1 bis 18 Kohlenstoffatomen, der zudem ausschließlich mindestens zwei Carboxygruppen als funktionelle Gruppen aufweist.

Beispielsweise sind im Rahmen der vorliegenden Erfindung Dicarbonsäuren wie etwa Oxalsäure, Bernsteinsäure, Weinsäure, 1,4-Butandicarbonsäure, 1,4-Butendicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 1,3-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methylchinolin-3,4-dicarbonsäure, Chinolin-2,4-dicarbonsäure, Chinoxalin-2,3-dicarbonsäure, 6-Chlorchinoxalin-2,3-dicarbonsäure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicarbonsäure, 2-Methylimidazol-4,5-dicarbonsäure, Thiophen-3,4-dicarbonsäure, 2-lsopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octadicarbonsäure, Pentan-3,3-carbonsäure, 4,4'-Diamino-1,1'-diphenyl-3,3'-dicarbon-säure, 4,4'-Diaminodiphenyl-3,3'-dicarbonsäure, Benzidin-3,3'-dicarbonsäure, 1,4-Bis-(phenylamino)-benzol-2,5-dicarbonsäure, 1,1'-Dinaphthyldicarbonsäure, 7-Chlor-8-methylchinolin-2,3-dicarbonsäure, 1-Anilinoanthrachinon-2,4'-dicarbonsäure, Polytetrahydrofuran-250-dicarbonsäure, 1,4-Bis-(carboxymethyl)-piperazin-2,3-dicarbonsäure, 7-Chlorchinolin-3,8-dicarbonsäure, 1-(4-Carboxy)-phenyl-3-(4-chlor)-phenylpyrazolin-4,5-dicarbonsäure, 1,4,5,6,7,7,-Hexachlor-5-norbornen-2,3-dicarbonsäure, Phenylindandicarbonsäure, 1,3-Dibenzyl-2-oxo-imidazolidin-4,5-dicarbonsäure, 1,4-Cyclohexandicarbonsäure, Naphthalin-1,8-dicarbonsäure, 2-Benzoyl-benzol-1,3-dicarbon-säure, 1,3-Dibenzyl-2-oxoimidazolidin-4,5-cis-dicarbonsäure, 2,2'-Bichinolin-4,4'-di-carbonsäure, Pyridin-3,4-dicarbonsäure, 3,6,9-Trioxaundecandicarbonsäure, Hydroxybenzophenon-dicarbonsäure, Pluriol E 300-dicarbonsäure, Pluriol E 400-dicarbonsäure, Pluriol E 600-dicarbonsäure, Pyrazol-3,4-dicarbonsäure, 2,3-Pyrazindicarbonsäure, 5,6-Dimethyl-2,3-pyrazindicarbonsäure, 4,4'-Diaminodiphenyletherdiimiddicarbonsäure, 4,4'-Diaminodiphenylmethandiimiddicarbonsäure, 4,4'-Diaminodiphenylsulfondiimiddicarbonsäure, 1,4-Naphthalindicarbonsäure, 2,6-Naphthalindicarbonsäure, 1,3-Adamantandicarbonsäure, 1,8-Naphthalindicarbonsäure, 2,3-Naphthalindicarbonsäure, 8-Methoxy-2,3-naphthalindicarbonsäure, 8-Nitro-2,3-naphthalin-carbonsäure, 8-Sulfo-2,3-naphthalindicarbonsäure, Anthracen-2,3-dicarbonsäure, 2',3'-Diphenyl-p-terphenyl-4,4"-dicarbonsäure, Diphenylether-4,4'-dicarbonsäure, Imidazol-4,5-dicarbonsäure, 4(1H)-Oxothiochromen-2,8-dicarbonsäure, 5-tert-Butyl-1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptadicarbonsäure, 5-Hydroxy-1,3-Benzoldicarbonsäure, 2,5-Dihydroxy-1,4-dicarbonsäure, Pyrazin-2,3-dicarbonsäure, Furan-2,5-dicarbonsäure, 1-Nonen-6,9-dicarbonsäure, Eicosendicarbonsäure, 4,4'-Dihydroxydiphenylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Dichlorfluorubin-4,11-dicarbonsäure, 7-Chlor-3-methylchinolin-6,8-dicarbonsäure, 2,4-Dichlorbenzophenon-2',5'-dicarbonsäure, 1,3-Benzoldicarbonsäure, 2,6-Pyridindicarbonsäure, 1-Methylpyrrol-3,4-dicarbonsäure, 1-Benzyl-1H-pyrrol-3,4-dicarbonsäure, Anthrachinon-1,5-dicarbonsäure, 3,5-Pyrazoldicarbonsäure, 2-Nitrobenzol-1,4-dicarbonsäure, Heptan-1,7-dicarbonsäure, Cyclobutan-1,1-dicarbonsäure 1,14-Tetradecandicarbonsäure, 5,6-Dehydronorbornan-2,3-dicarbonsäure, 5-Ethyl-2,3-pyridindicarbonsäure oder Campherdicarbonsäure,
Tricarbonsäuren wie etwa
2-Hydroxy-1,2,3-propantricarbonsäure, 7-Chlor-2,3,8-chinolintricarbonsäure, 1,2,3-, 1,2,4-Benzoltricarbonsäure, 1,2,4-Butantricarbonsäure, 2-Phosphono-1,2,4-butantricarbonsäure, 1,3,5-Benzoltricarbonsäure, 1-Hydroxy-1,2,3-Propantricarbonsäure, 4,5-Dihydro-4,5-dioxo-1H-pyrrolo[2,3-F]chinolin-2,7,9-tricarbonsäure, 5-Acetyl-3-amino-6-methylbenzol-1,2,4-tricarbonsäure, 3-Amino-5-benzoyl-6-methylbenzol-1,2,4-tricarbon-+säure, 1,2,3-Propantricarbonsäure oder Aurintricarbonsäure,
oder Tetracarbonsäuren wie etwa
1,1-Dioxidperylo[1,12-BCD]thiophen-3,4,9,10-tetracarbonsäure, Perylentetracarbonsäuren wie Perylen-3,4,9,10-tetracarbonsäure oder Perylen-1,12-sulfon-3,4,9,10-tetracarbonsäure, Butantetracarbonsäuren wie 1,2,3,4-Butantetracarbonsäure oder Meso-1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzo-phenontetracarbonsäure, Tetrahydrofurantetracarbonsäure oder Cyclopentantetracarbonsäuren wie Cyclopentan-1,2,3,4-tetracarbonsäure
zu nennen.

Ganz besonders bevorzugt werden gegebenenfalls mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P bevorzugte Heteroatome sind hierbei N, S und/oder O. Als geeigneter Substituent ist diesbezüglich unter anderem -OH, eine Nitrogruppe, eine Aminogruppe oder eine Alkyl- oder Alkoxygruppe zu nennen.

Insbesondere bevorzugt werden als mindestens zweizähnige organische Verbindungen Acetylendicarbonsäure (ADC), Campherdicarbonsäure, Fumarsäure, Bernsteinsäure, Benzoldicarbonsäuren, Naphthalindicarbonsäuren, Biphenyldicarbonsäuren wie beispielsweise 4,4'-Biphenyldicarbonsäure (BPDC), Pyrazindicarbonsäuren, wie 2,5-Pyrazindicarbonsäure, Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-, 1,2,4-Benzoltricarbonsäure oder 1,3,5-Benzoltricarbonsäure (BTC), Benzoltetracarbonsäure, Adamantantetracarbonsäure (ATC), Adamantandibenzoat (ADB) Benzoltribenzoat (BTB), Methantetrabenzoat (MTB), Adamantantetrabenzoat oder Dihydroxyterephthalsäuren wie beispielsweise 2,5-Dihydroxyterephthalsäure (DHBDC) eingesetzt.

Ganz besonders bevorzugt werden unter anderem Isophthalsäure, Terephthalsäure, 2,5-Dihydroxyterephthalsäure, 1,2,3-Benzoltricarbonsäure, 1,3,5-Benzoltricarbonsäure, 2,6-Naphthalindicarbonsäure, 1,4-Naphthalindicarbonsäure, 1,2,3,4- und 1,2,4,5-Benzoltetracarbonsäure, Campherdicarbonsäure oder 2,2'-Bipyridin-5,5'-dicarbonsäure eingesetzt.

Neben diesen mindestens zweizähnigen organischen Verbindungen kann das metallorganische Gerüstmaterial auch einen oder mehrere einzähnige Liganden umfassen.

Nachfolgend sind Beispiele für im Stand der Technik bekannte metallorganische Gerüstmaterialien angegeben. Neben der Kennzeichnung des MOF, dem Metall sowie dem mindestens zweizähnigen Liganden ist weiterhin das Lösemittel sowie die Zellenparameter (Winkel α, β und γ sowie die Abstände A, B und C in Å) angegeben. Letztere wurden durch Röntgenbeugung bestimmt.

| **MOF-n** | **Inhaltsstoffe molares Verhältnis M+L** | **Solvens s** | α | β | γ | **a** | **b** | **c** | **Raumgruppe** |
|---|---|---|---|---|---|---|---|---|---|
| MOF-0 | Zn(NO₃)₂·6H₂O H₃(BTC) | Ethanol | 90 | 90 | 120 | 16.711 | 16.711 | 14.189 | P6(3)/ Mcm |
| MOF-2 | Zn(NO₃)₂·6H₂O (0.246 mmol) H₂(BDC) 0.241 mmol) | DMF Toluen | 90 | 102.8 | 90 | 6.718 | 15.49 | 12.43 | P2(1)/n |
| MOF-3 | Zn(NO₃)₂·6H₂O (1.89 mmol) H₂(BDC) (1.93 mmol) | DMF MeOH | 99.72 | 111.11 | 108.4 | 9.726 | 9.911 | 10.45 | P-1 |
| MOF-4 | Zn(NO₃)₂·6H₂O (1.00 mmol) H₃(BTC) (0.5 mmol) | Ethanol | 90 | 90 | 90 | 14.728 | 14.728 | 14.728 | P2(1)3 |
| MOF-5 | Zn(NO₃)₂·6H₂O (2.22 mmol) H₂(BDC) (2.17 mmol) | DMF Chlorbenzen | 90 | 90 | 90 | 25.669 | 25.669 | 25.669 | Fm-3m |
| MOF-38 | Zn(NO₃)₂·6H₂O (0.27 mmol) H₃(BTC) (0.15 mmol) | DMF Chlorbenzen | 90 | 90 | 90 | 20.657 | 20.657 | 17.84 | I4cm |
| MOF-31 Zn(ADC)₂ | Zn(NO₃)₂·6H₂O 0.4 mmol H₂(ADC) 0.8 mmol | Ethanol | 90 | 90 | 90 | 10.821 | 10.821 | 10.821 | Pn(-3)m |
| MOF-12 Zn₂(ATC) | Zn(NO₃)₂·6H₂O 0.3 mmol Ha(ATC) 0.15 mmol | Ethanol | 90 | 90 | 90 | 15.745 | 16.907 | 18.167 | Pbca |
| MOF-20 ZnNDC | Zn(NO₃)₂·6H₂O 0.37 mmol H₂NDC 0.36 mmol | DMF Chlorbenzen | 90 | 92.13 | 90 | 8.13 | 16.444 | 12.807 | P2(1)/c |
| MOF-37 | Zn(NO₃)₂·6H₂O 0.2 mmol H₂NDC 0.2 mmol | DEF Chlorbenzen | 72.38 | 83.16 | 84.33 | 9.952 | 11.576 | 15.556 | P-1 |
| MOF-8 Tb₂(ADC) | Tb(NO₃)₃·5H₂O 0.10 mmol H₂ADC 0.20 mmol | DMSO MeOH | 90 | 115.7 | 90 | 19.83 | 9.822 | 19.183 | C2/c |
| MOF-9 Tb₂ (ADC) | Tb(NO₃)₃·5H₂O 0.08 mmol H₂ADB 0.12 mmol | DMSO | 90 | 102.09 | 90 | 27.056 | 16.795 | 28.139 | C2/c |
| MOF-6 | Tb(NO₃)₃·5H₂O 0.30 mmol H₂ (BDC) 0.30 mmol | DMF MeOH | 90 | 91.28 | 90 | 17.599 | 19.996 | 10.545 | P21/c |
| MOF-7 | Tb(NO₃)₃·5H₂O 0.15 mmol H₂(BDC) 0.15 mmol | H₂O | 102.3 | 91.12 | 101.5 | 6.142 | 10.069 | 10.096 | P-1 |
| MOF-69A | Zn(NO₃)₂·6H₂O 0.083 mmol 4,4'BPDC 0.041 mmol | DEF H₂O₂ MeNH₂ | 90 | 111.6 | 90 | 23.12 | 20.92 | 12 | C2/c |
| MOF-69B | Zn(NO₃)₂·6H₂O 0.083 mmol 2,6-NCD 0.041 mmol | DEF H₂O₂ MeNH₂ | 90 | 95.3 | 90 | 20.17 | 18.55 | 12.16 | C2/c |
| MOF-11 Cu₂(ATC) | Cu(NO₃)₂·2.5H₂O 0.47 mmol H₂ATC 0.22 mmol | H₂O | 90 | 93.86 | 90 | 12.987 | 11.22 | 1.1.336 | C2/c |
| MOF-11 Cu₂(ATC) dehydr. | | | 90 | 90 | 90 | 8.4671 | 8.4671 | 14.44 | P42/ mmc |
| MOF-14 Cu₃ (BTB) | Cu(NO₃)₂·2.5H₂O 0.28 mmol H₃BTB 0.052 mmol | H₂O DMF EtOH | 90 | 90 | 90 | 26.946 | 26.946 | 26.946 | Im-3 |
| MOF-32 Cd(ATC) | Cd(NO₃)₂·4H₂O 0.24 mmol H₄ATC 0.10 mmol | H₂O NaOH | 90 | 90 | 90 | 13.468 | 13.468 | 13.468 | P(-4)3m |
| MOF-33 Zn₂ (ATB) | ZnCl₂ 0.15 mmol H₄ATB 0.02 mmol | H₂O DMF EtOH | 90 | 90 | 90 | 19.561 | 15.255 | 23.404 | Imma |
| MOF-34 Ni(ATC) | Ni(NO₃)₂·6H₂O 0.24 mmol H₄ATC 0.10 mmol | H₂O NaOH | 90 | 90 | 90 | 10.066 | 11.163 | 19.201 | P2₁2₁2₁ |
| MOF-36 Zn₂ (MTB) | Zn(NO₃)₂·4H₂O 0.20 mmol H₄MTB 0.04 mmol | H₂O DMF | 90 | 90 | 90 | 15.745 | 16.907 | 18.167 | Pbca |
| MOF-39 Zn₃O(HBTB) | Zn(NO₃)₂ 4H₂O 0.27 mmol H₃BTB 0.07 mmol | H₂O DMF EtOH | 90 | 90 | 90 | 17.158 | 21.591 | 25.308 | Pnma |
| NO305 | FeCl₂·4H₂O 5.03 mmol Ameisensäure. 86.90 mmol | DMF | 90 | 90 | 120 | 8.2692 | 8.2692 | 63.566 | R-3c |
| NO3O6A | FeCl₂·4H₂O 5.03 mmol Ameisensäure. 86.90 mmol | DEF | 90 | 90 | 90 | 9.9364 | 18.374 | 18.374 | Pbcn |
| NO29 MOF-0 ähnlich | Mn(Ac)₂·4H₂O 0.46 mmol H₃BTC 0.69 mmol | DMF | 120 | 90 | 90 | 14.16 | 33.521 | 33.521 | P-1 |
| BPR48 A2 | Zn(NO₃)₂ 6H₂O 0.012 mmol H₂BDC 0.012 mmol | DMSO Toluen | 90 | 90 | 90 | 14.5 | 17.04 | 18.02 | Pbca |
| BPR69 B1 | Cd(NO₃)₂ 4H₂O 0.0212 mmol H₂BDC 0.0428 mmol | DMSO | 90 | 98.76 | 90 | 14.16 | 15.72 | 17.66 | Cc |
| BPR92 A2 | Co(NO₃)₂·6H₂O 0.018 mmol H₂BDC 0.018 mmol | NMP | 106.3 | 107.63 | 107.2 | 7.5308 | 10.942 | 11.025 | P1 |
| BPR95 C5 | Cd(NO₃)₂ 4H₂O 0.012 mmol H₂BDC 0.36 mmol | NMP | 90 | 112.8 | 90 | 14.460 | 11.085 | 15.829 | P2(1)/n |
| Cu C₆H₄O₆ | Cu(NO₃)₂·2.5H₂O 0.370 mmol H₂BDC(OH)₂ 0.37 mmol | DMF Chlorbenzen | 90 | 105.29 | 90 | 15.259 | 14.816 | 14.13 | P2(1)/c |
| M(BTC) MOF-0 ähnlich | Co(SO₄) H₂O 0.055 mmol H₃BTC 0.037 mmol | DMF | wie MOF-O | | | | | | |
| Tb(C₆H₄O₆) | Tb(NO₃)₃·5H₂O 0.370 mmol H₂(C₆H₄O₆) 0.56 mmol | DMF Chlorbenzen | 104.6 | 107.9 | 97.147 | 10.491 | 10.981 | 12.541 | P-1 |
| Zn (C₂O₄) | ZnCl₂ 0.370 mmol Oxalsäure 0.37 mmol | DMF Chlorbenzen | 90 | 120 | 90 | 9.4168 | 9.4168 | 8.464 | P(-3)1m |
| Co(CHO) | Co(NO₃)₂·5H₂O 0.043 mmol Ameisensäure 1.60 mmol | DMF | 90 | 91.32 | 90 | 11.328 | 10.049 | 14.854 | P2(1)/n |
| Cd(CHO) | Cd(NO₃)₂·4H₂O 0.185 mmol formic acid 0.185 mmol | DMF | 90 | 120 | 90 | 8.5168 | 8.5168 | 22.674 | R-3c |
| Cu(C₃H₂O₄) | Cu(NO₃)₂·2.5H₂O 0.043 mmol Malonsäure. 0.192 mmol | DMF | 90 | 90 | 90 | 8.366 | 8.366 | 11.919 | P43 |
| Zn₆ (NDC)₅ MOF-48 | Zn(NO₃)₂·6H₂O 0.097 mmol 14 NDC 0.069 mmol | DMF Chlorbenzen H₂O₂ | 90 | 95.902 | 90 | 19.504 | 16.482 | 14.64 | C2/m |
| MOF-47 | Zn(NO₃)₂ 6H₂O 0.185 mmol H₂(BDC[CH₃]₄) 0.185 mmol | DMF Chlorbenzen H₂O₂ | 90 | 92.55 | 90 | 11.303 | 16.029 | 17.535 | P2(1)/c |
| MO25 | Cu(NO₃)₂·2.5H₂O 0.084 mmol BPhDC 0.085 mmol | DMF | 90 | 112.0 | 90 | 23.880 | 16.834 | 18.389 | P2(1)/c |
| Cu-Thio | Cu(NO₃)₂·2.5H₂O 0.084 mmol Thiophen Dicarbonsäure 0.085 mmol | DEF | 90 | 113.6 | 90 | 15.474 7 | 14.514 | 14.032 | P2(1)/c |
| CIBDC1 | Cu(NO₃)₂·2.5H₂O0. 084 mmol H₂(BDCCl₂) 0.085 mmol | DMF | 90 | 105.6 | 90 | 14.911 | 15.622 | 18.413 | C2/c |
| MOF-101 | Cu(NO₃)₂·2.5H₂O 0.084 mmol BrBDC 0.085 mmol | DMF | 90 | 90 | 90 | 21.607 | 20.607 | 20.073 | Fm3m |
| Zn₃(BTC)₂ | ZnCl₂ 0.033 mmol H₃BTC 0.033 mmol | DMF EtOH Base zuge geben | 90 | 90 | 90 | 26.572 | 26.572 | 26.572 | Fm-3m |
| MOF-j | Co(CH₃CO₂)₂·4H₂ O (1.65 mmol) H₃(BZC) (0.95 mmol) | H₂O | 90 | 112.0 | 90 | 17.482 | 12.963 | 6.559 | C2 |
| MOF-n | Zn(NO₃)₂·6H₂O H₃ (BTC) | Ethanol | 90 | 90 | 120 | 16.711 | 16.711 | 14.189 | P6(3)/mcm |
| PbBDC | Pb(NO₃)₂ (0.181 mmol) H₂(BDC) (0.181 mmol) | DMF Ethanol | 90 | 102.7 | 90 | 8.3639 | 17.991 | 9.9617 | P2(1)/n |
| Znhex | Zn(NO₃)₂·6H₂O (0.171 mmol) H₃BTB (0.114 mmol) | DMF p-Xylen Ethanol | 90 | 90 | 120 | 37.116 5 | 37.117 | 30.019 | P3(1)c |
| AS16 | FeBr₂ 0.927 mmol H₂(BDC) 0.927 mmol | DMF anhydr. | 90 | 90.13 | 90 | 7.2595 | 8.7894 | 19.484 | P2(1)c |
| AS27-2 | FeBr₂ 0.927 mmol H₃(BDC) 0.464 mmol | DMF anhydr. | 90 | 90 | 90 | 26.735 | 26.735 | 26.735 | Fm3m |
| AS32 | FeCl₃ | DMF | 90 | 90 | 120 | 12.535 | 12.535 | 18.479 | P6(2)c |
| | 1.23 mmol | anhydr. Ethanol | | | | | | | |
| | H₂(BDC) | | | | | | | | |
| | 1.23 mmol | | | | | | | | |
| AS54-3 | FeBr₂ | DMF anhydr. n-Propanol | 90 | 109.98 | 90 | 12.019 | 15.286 | 14.399 | C2 |
| | 0.927 | | | | | | | | |
| | BPDC | | | | | | | | |
| | 0.927 mmol | | | | | | | | |
| AS61-4 | FeBr₂ | Pyridin anhydr. | 90 | 90 | 120 | 13.017 | 13.017 | 14.896 | P6(2)c |
| | 0.927 mmol | | | | | | | | |
| | m-BDC | | | | | | | | |
| | 0.927 mmol | | | | | | | | |
| AS68-7 | FeBr₂ | DMF anhydr. Pyridin | 90 | 90 | 90 | 18.340 | 10.036 | 18.039 | Pca2₁ |
| | 0.927 mmol | | | | | 7 | | | |
| | m-BDC | | | | | | | | |
| | 1.204 mmol | | | | | | | | |
| Zn(ADC) | Zn(NO₃)₂·6H₂O | DMF Chlorbenzen | 90 | 99.85 | 90 | 16.764 | 9.349 | 9.635 | C2/c |
| | 0.37 mmol | | | | | | | | |
| | H₂(ADC) | | | | | | | | |
| | 0.36 mmol | | | | | | | | |
| MOF-12 | Zn(NO₃)₂·6H₂O | Ethanol | 90 | 90 | 90 | 15.745 | 16.907 | 18.167 | Pbca |
| Zn₂ (ATC) | 0.30 mmol | | | | | | | | |
| | Ha(ATC) | | | | | | | | |
| | 0.15 mmol | | | | | | | | |
| MOF-20 | Zn(NO₃)₂·6H₂O | DMF Chlorbenzen | 90 | 92.13 | 90 | 8.13 | 16.444 | 12.807 | P2(1)/c |
| ZnNDC | 0.37 mmol | | | | | | | | |
| | H₂NDC | | | | | | | | |
| | 0.36 mmol | | | | | | | | |
| MOF-37 | Zn(NO₃)₂·6H₂O | DEF Chlorbenzen | 72.38 | 83.16 | 84.33 | 9.952 | 11.576 | 15.556 | P-1 |
| | 0.20 mmol | | | | | | | | |
| | H₂NDC | | | | | | | | |
| | 0.20 mmol | | | | | | | | |
| Zn(NDC) | Zn(NO₃)₂·6H₂O | DMSO | 68.08 | 75.33 | 88.31 | 8.631 | 10.207 | 13.114 | P-1 |
| (DMSO) | H₂NDC | | | | | | | | |
| Zn(NDC) | Zn(NO₃)₂·6H₂O | | 90 | 99.2 | 90 | 19.289 | 17.628 | 15.052 | C2/c |
| | H₂NDC | | | | | | | | |
| Zn(HPDC) | Zn(NO₃)₂·4H₂O | DMF H₂O | 107.9 | 105.06 | 94.4 | 8.326 | 12.085 | 13.767 | P-1 |
| | 0.23 mmol | | | | | | | | |
| | H₂(HPDC) | | | | | | | | |
| | 0.05 mmol | | | | | | | | |
| Co(HPDC) | Co(NO₃)₂·6H₂O | DMF H₂O/ Ethanol | 90 | 97.69 | 90 | 29.677 | 9.63 | 7.981 | C2/c |
| | 0.21 mmol | | | | | | | | |
| | H₂ (HPDC) | | | | | | | | |
| | 0.06 mmol | | | | | | | | |
| Zn₃(PDC) | Zn(NO₃)₂·4H₂O | DMF/ CIBz. H₂0/ TEA | 79.34 | 80.8 | 85.83 | 8.564 | 14.046 | 26.428 | P-1 |
| 2.5 | 0.17 mmol | | | | | | | | |
| | H₂(HPDC) | | | | | | | | |
| | 0.05 mmol | | | | | | | | |
| Cd₂ | Cd(NO₃)₂·4H₂O | Metha- | 70.59 | 72.75 | 87.14 | 10.102 | 14.412 | 14.964 | P-1 |
| (TPDC)2 | 0.06 mmol H₂(HPDC) 0.06 mmol | nol/ CHP H₂O | | | | | | | |
| Tb(PDC)1. 5 | Tb(NO₃)₃·5H₂O 0.21 mmol H₂(PDC) 0.034 mmol | DMF H₂O/ Ethanol | 109.8 | 103.61 | 100.14 | 9.829 | 12.11 | 14.628 | P-1 |
| | | | | | | | | | |
| ZnDBP | Zn(NO₃)₂·6H₂O 0.05 mmol Dibenzylphosphat 0.10 mmol | MeOH | 90 | 93.67 | 90 | 9.254 | 10.762 | 27.93 | P2/n |
| Zn₃(BPDC) | ZnBr₂ 0.021 mmol 4,4'BPDC 0.005 mmol | DMF | 90 | 102.76 | 90 | 11.49 | 14.79 | 19.18 | P21/n |
| CdBDC | Cd(NO₃)₂·4H₂O 0.100 mmol H₂(BDC) 0.401 mmol | DMF Na₂SiO ³ (aq) | 90 | 95.85 | 90 | 11.2 | 11.11 | 16.71 | P21/n |
| Cd-mBDC | Cd(NO₃)₂·4H₂O 0.009 mmol H₂(mBDC) 0.018 mmol | DMF MeNH₂ | 90 | 101.1 | 90 | 13.69 | 18.25 | 14.91 | C2/c |
| Zn₄OBND C | Zn(NO₃)₂·6H₂O 0.041 mmol BNDC | DEF MeNH₂ H₂O₂ | 90 | 90 | 90 | 22.35 | 26.05 | 59.56 | Fmmm |
| Eu(TCA) | Eu(NO₃)₃·6H₂O 0.14 mmol TCA 0.026 mmol | DMF Chlorbenzen | 90 | 90 | 90 | 23.325 | 23.325 | 23.325 | Pm-3n |
| Tb(TCA) | Tb(NO₃)₃·6H₂O 0.069 mmol TCA 0.026 mmol | DMF Chlorbenzen | 90 | 90 | 90 | 23.272 | 23.272 | 23.372 | Pm-3n |
| Formate | Ce(NO₃)₃·6H₂O 0.138 mmol Ameisensäure. 0.43 mmol | H₂O | 90 Ethanol | 90 | 120 | 10.668 | 10.667 | 4.107 | R-3m |
| | FeCl₂·4H₂O 5.03 mmol Ameisensre. 86.90 mmol | DMF | 90 | 90 | 120 | 8.2692 | 8.2692 | 63.566 | R-3c |
| | FeCl₂·4H₂O 5.03 mmol Ameisensäure. 86.90 mmol | DEF | 90 | 90 | 90 | 9.9364 | 18.374 | 18.374 | Pbcn |
| | FeCl₂·4H₂O 5.03 mmol Ameisensäure. 86.90 mmol | DEF | 90 | 90 | 90 | 8.335 | 8.335 | 13.34 | P-31c |
| NO330 | FeCl₂·4H₂O 0.50 mmol Ameisensre. 8.69 mmol | Form-amid | 90 | 90 | 90 | 8.7749 | 11.655 | 8.3297 | Pnna |
| NO332 | FeCl₂·4H₂O 0.50 mmol Ameisensäure. 8.69 mmol | DIP | 90 | 90 | 90 | 10.031 3 | 18.808 | 18.355 | Pbcn |
| | | | | | | | | | |
| NO333 | FeCl₂·4H₂O 0.50 mmol Ameisensäure. 8.69 mmol | DBF | 90 | 90 | 90 | 45.275 4 | 23.861 | 12.441 | Cmcm |
| NO335 | FeCl₂·4H₂O 0.50 mmol Ameisensäure. 8.69 mmol | CHF | 90 | 91.372 | 90 | 11.596 4 | 10.187 | 14.945 | P21/n |
| NO336 | FeCl₂·4H₂O 0.50 mmol Ameisensäure. 8.69 mmol | MFA | 90 | 90 | 90 | 11.794 5 | 48.843 | 8.4136 | Pbcm |
| NO13 | Mn(Ac)₂·4H₂O 0.46 mmol Benzoesäure. 0.92 mmol Bipyridin 0.46 mmol | Ethanol | 90 | 90 | 90 | 18.66 | 11.762 | 9.418 | Pbcn |
| NO29 MOF-0 ähnlich | Mn(Ac)₂·4H₂O 0.46 mmol H₃BTC 0.69 mmol | DMF | 120 | 90 | 90 | 14.16 | 33.521 | 33.521 | P-1 |
| Mn(hfac)₂ (O₂CC₆H₅) | Mn(Ac)₂·4H₂O 0.46 mmol Hfac 0.92 mmol Bipyridin 0.46 mmol | Ether | 90 | 95.32 | 90 | 9.572 | 17.162 | 14.041 | C2/c |
| BPR43G2 | Zn(NO₃)₂·6H₂O 0.0288 mmol H₂BDC 0.0072 mmol | DMF CH₃CN | 90 | 91.37 | 90 | 17.96 | 6.38 | 7.19 | C2/c |
| BPR48A2 | Zn(NO3)₂ 6H₂O 0.012 mmol H₂BDC 0.012 mmol | DMSO Toluen | 90 | 90 | 90 | 14.5 | 17.04 | 18.02 | Pbca |
| BPR49B1 | Zn(NO₃)₂ 6H₂O 0.024 mmol H₂BDC 0.048 mmol | DMSO Methanol | 90 | 91.172 | 90 | 33.181 | 9.824 | 17.884 | C2/c |
| BPR56E1 | Zn(NO₃)₂ 6H₂O 0.012 mmol H₂BDC 0.024 mmol | DMSO n-Propanol | 90 | 90.096 | 90 | 14.587 3 | 14.153 | 17.183 | P2(1)/n |
| BPR68D10 | Zn(NO₃)₂ 6H₂O 0.0016 mmol H₃BTC 0.0064 mmol | DMSO Benzen | 90 | 95.316 | 90 | 10.062 7 | 10.17 | 16.413 | P2(1)/c |
| BPR69B1 | Cd(NO₃)₂ 4H₂O | DMSO | 90 | 98.76 | 90 | 14.16 | 15.72 | 17.66 | Cc |
| | 0.0212 mmol H₂BDC 0.0428 mmol | | | | | | | | |
| | | | | | | | | | |
| BPR73E4 | Cd(NO₃)₂ 4H₂O 0.006 mmol H₂BDC 0.003 mmol | DMSO Toluen | 90 | 92.324 | 90 | 8.7231 | 7.0568 | 18.438 | P2(1)/n |
| BPR76D5 | Zn(NO₃)₂ 6H₂O 0.0009 mmol H₂BzPDC 0.0036 mmol | DMSO | 90 | 104.17 | 90 | 14.419 1 | 6.2599 | 7.0611 | Pc |
| BPR80B5 | Cd(NO₃)₂·4H₂O 0.018 mmol H₂BDC 0.036 mmol | DMF | 90 | 115.11 | 90 | 28.049 | 9.184 | 17.837 | C2/c |
| BPR80H5 | Cd(NO₃)₂ 4H₂O 0.027 mmol H₂BDC 0.027 mmol | DMF | 90 | 119.06 | 90 | 11.474 6 | 6.2151 | 17.268 | P2/c |
| BPR82C6 | Cd(NO₃)₂ 4H₂O 0.0068 mmol H₂BDC 0.202 mmol | DMF | 90 | 90 | 90 | 9.7721 | 21.142 | 27.77 | Fdd2 |
| BPR86C3 | Co(NO₃)₂ 6H₂O 0.0025 mmol H₂BDC 0.075 mmol | DMF | 90 | 90 | 90 | 18.344 9 | 10.031 | 17.983 | Pca2(1) |
| BPR86H6 | Cd(NO₃)₂·6H₂O 0.010 mmol H₂BDC 0.010 mmol | DMF | 80.98 | 89.69 | 83.41 2 | 9.8752 | 10.263 | 15.362 | P-1 |
| | Co(NO₃)₂ 6H₂O | NMP | 106.3 | 107.63 | 107.2 | 7.5308 | 10.942 | 11.025 | P1 |
| BPR95A2 | Zn(NO₃)₂ 6H₂O 0.012 mmol H₂BDC 0.012 mmol | NMP | 90 | 102.9 | 90 | 7.4502 | 13.767 | 12.713 | P2(1)/c |
| CuC₆F₄O₄ | Cu(NO₃)₂·2.5H₂O 0.370 mmol H₂BDC(OH)₂ 0.37 mmol | DMF Chlorbenzen | 90 | 98.834 | 90 | 10.967 5 | 24.43 | 22.553 | P2(1)/n |
| Fe Formic | FeCl₂·4H₂O 0.370 mmol Ameisensäure. 0.37 mmol | DMF | 90 | 91.543 | 90 | 11.495 | 9.963 | 14.48 | P2(1)/n |
| Mg Formic | Mg(NO₃)₂·6H₂O 0.370 mmol Ameisensäure. 0.37 mmol | DMF | 90 | 91.359 | 90 | 11.383 | 9.932 | 14.656 | P2(1)/n |
| MgC₆H₄O₆ | Mg(NO₃)₂·6H₂O | DMF | 90 | 96.624 | 90 | 17.245 | 9.943 | 9.273 | C2/c |
| | 0.370 mmol H₂BDC(OH)₂ 0.37 mmol | | | | | | | | |
| Zn C₂H₄BDC MOF-38 | ZnCl₂ 0.44 mmol CBBDC 0.261 mmol | DMF | 90 | 94.714 | 90 | 7.3386 | 16.834 | 12.52 | P2(1)/n |
| MOF-49 | ZnCl₂ 0.44 mmol m-BDC 0.261 mmol | DMF CH₃CN | 90 | 93.459 | 90 | 13.509 | 11.984 | 27.039 | P2/c |
| MOF-26 | Cu(NO₃)₂·5H₂O 0.084 mmol DCPE 0.085 mmol | DMF | 90 | 95.607 | 90 | 20.879 7 | 16.017 | 26.176 | P2(1)/n |
| MOF-112 | Cu(NO₃)₂·2.5H₂O 0.084 mmol o-Br-m-BDC 0.085 mmol | DMF Ethanol | 90 | 107.49 | 90 | 29.324 1 | 21.297 | 18.069 | C2/c |
| MOF-109 | Cu(NO₃)₂·2.5H₂O 0.084 mmol KDB 0.085 mmol | DMF | 90 | 111.98 | 90 | 23.880 1 | 16.834 | 18.389 | P2(1)/c |
| MOF-111 | Cu(NO₃)₂·2.5H₂O 0.084 mmol o-BrBDC 0.085 mmol | DMF Ethanol | 90 | 102.16 | 90 | 10.676 7 | 18.781 | 21.052 | C2/c |
| MOF-110 | Cu(NO₃)₂·2.5H₂O 0.084 mmol Thiophen Dicarbonsäure 0.085 mmol | DMF | 90 | 90 | 120 | 20.065 2 | 20.065 | 20.747 | R-3/m |
| MOF-107 | Cu(NO₃)₂·2.5H₂O 0.084 mmol Thiophen Dicarbonsäure 0.085 mmol | DEF | 104.8 | 97.075 | 95.20 6 | 11.032 | 18.067 | 18.452 | P-1 |
| MOF-108 | Cu(NO₃)₂·2.5H₂O 0.084 mmol Thiophen Dicarbonsäure 0.085 mmol | DBF/ Methanol | 90 | 113.63 | 90 | 15.474 7 | 14.514 | 14.032 | C2/c |
| MOF-102 | Cu(NO₃)₂·2.5H₂O 0.084 mmol H₂(BDCCl₂) 0.085 mmol | DMF | 91.63 | 106.24 | 112.0 1 | 9.3845 | 10.794 | 10.831 | P-1 |
| Clbdc1 | Cu(NO₃)₂·2.5H₂O 0.084 mmol H₂(BDCCl₂) 0.085 mmol | DEF | 90 | 105.56 | 90 | 14.911 | 15.622 | 18.413 | P-1 |
| Cu(NMOP) | Cu(NO₃)₂·2.5H₂O | DMF | 90 | 102.37 | 90 | 14.923 | 18.727 | 15.529 | P2(1)/m |
| | 0.084 mmol NBDC 0.085 mmol | | | | | 8 | | | |
| Tb(BTC) | Tb(NO₃)₃·5H₂O 0.033 mmol H₃BTC 0.033 mmol | DMF | 90 | 106.02 | 90 | 18.698 6 | 11.368 | 19.721 | |
| Zn₃(BTC)₂ Honk | ZnCl₂ 0.033 mmol H₃BTC 0.033 mmol | DMF Ethanol | 90 | 90 | 90 | 26.572 | 26.572 | 26.572 | Fm-3m |
| Zn₄O(NDC) | Zn(NO₃)₂·4H₂O 0.066 mmol 14NDC 0.066 mmol | DMF Ethanol | 90 | 90 | 90 | 41.559 4 | 18.818 | 17.574 | aba2 |
| CdTDC | Cd(NO₃)₂·4H₂O 0.014 mmol Thiophen 0.040 mmol DABCO 0.020 mmol | DMF H₂O | 90 | 90 | 90 | 12.173 | 10.485 | 7.33 | Pmma |
| IRMOF-2 | Zn(NO₃)₂·4H₂O 0.160 mmol o-Br-BDC 0.60 mmol | DEF | 90 | 90 | 90 | 25.772 | 25.772 | 25.772 | Fm-3m |
| IRMOF-3 | Zn(NO₃)₂·4H₂O 0.20 mmol H₂N-BDC 0.60 mmol | DEF Ethanol | 90 | 90 | 90 | 25.747 | 25.747 | 25.747 | Fm-3m |
| IRMOF-4 | Zn(NO₃)₂·4H₂O 0.11 mmol [C₃H₇O]₂-BDC 0.48 mmol | DEF | 90 | 90 | 90 | 25.849 | 25.849 | 25.849 | Fm-3m |
| IRMOF-5 | Zn(NO₃)₂·4H₂O 0.13 mmol [C₅H₁₁O]₂-BDC 0.50 mmol | DEF | 90 | 90 | 90 | 12.882 | 12.882 | 12.882 | Pm-3m |
| IRMOF-6 | Zn(NO₃)₂·4H₂O 0.20 mmol [C₂H₄]-BDC 0.60 mmol | DEF | 90 | 90 | 90 | 25.842 | 25.842 | 25.842 | Fm-3m |
| IRMOF-7 | Zn(NO₃)₂·4H₂O 0.07 mmol 1,4NDC 0.20 mmol | DEF | 90 | 90 | 90 | 12.914 | 12.914 | 12.914 | Pm-3m |
| IRMOF-8 | Zn(NO₃)₂·4H₂O 0.55 mmol 2,6NDC 0.42 mmol | DEF | 90 | 90 | 90 | 30.092 | 30.092 | 30.092 | Fm-3m |
| IRMOF-9 | Zn(NO₃)₂·4H₂O | DEF | 90 | 90 | 90 | 17.147 | 23.322 | 25.255 | Pnnm |
| | 0.05 mmol BPDC 0.42 mmol | | | | | | | | |
| IRMOF-10 | Zn(NO₃)₂·4H₂O 0.02 mmol BPDC 0.012 mmol | DEF | 90 | 90 | 90 | 34.281 | 34.281 | 34.281 | Fm-3m |
| IRMOF-11 | Zn(NO₃)₂·4H₂O 0.05 mmol HPDC 0.20 mmol | DEF | 90 | 90 | 90 | 24.822 | 24.822 | 56.734 | R-3m |
| IRMOF-12 | Zn(NO₃)₂·4H₂O 0.017 mmol HPDC 0.12 mmol | DEF | 90 | 90 | 90 | 34.281 | 34.281 | 34.281 | Fm-3m |
| | | | | | | | | | |
| IRMOF-13 | Zn(NO₃)₂·4H₂O 0.048 mmol PDC 0.31 mmol | DEF | 90 | 90 | 90 | 24.822 | 24.822 | 56.734 | R-3m |
| IRMOF-14 | Zn(NO₃)₂·4H₂O 0.17 mmol PDC 0.12 mmol | DEF | 90 | 90 | 90 | 34.381 | 34.381 | 34.381 | Fm-3m |
| IRMOF-15 | Zn(NO₃)₂·4H₂O 0.063 mmol TPDC 0.025 mmol | DEF | 90 | 90 | 90 | 21.459 | 21.459 | 21.459 | Im-3m |
| IRMOF-16 | Zn(NO₃)₂·4H₂O 0.0126 mmol TPDC 0.05 mmol | DEF NMP | 90 | 90 | 90 | 21.49 | 21.49 | 21.49 | Pm-3m |

ADC Acetylendicarbonsäure
NDC Naphthalindicarbonsäure
BDC Benzoldicarbonsäure
ATC Adamantantetracarbonsäure
BTC Benzoltricarbonsäure
BTB Benzoltribenzoesäure
MTB Methantetrabenzoesäure
ATB Adamantantetrabenzoesäure
ADB Adamantandibenzoesäure

Weitere MOF sind MOF-177, MOF-178, MOF-74, MOF-235, MOF-236, MOF-69 bis 80, MOF-501, MOF-502, weiche in der Literatur beschrieben sind.

Ganz besonders bevorzugt sind im Rahmen der vorliegenden Erfindung die so genannten IRMOF-Materialien, insbesondere IRMOF-1 (= MOF-5).

Im Falle Bor-organische Gerüstmaterialien tritt anstelle des Metallions eine mindestens zwei Borongruppen aufweisende organische Verbindung. Hierbei kann das Gerüst der Verbindung ebenso wie oben für die metallorganischen Gerüstmaterialien ausgeführte mindestens zweizähnige organische Verbindung eingesetzt werden. Weiterhin muss diese jedoch mindestens zwei Borongruppen (-B(OH)₂) aufweisen. Beispielhaft seien hier Benzoldiboronsäuren genannt, insbesondere Benzol-1,2-diboronsäure. Jede der Borongruppen reagiert mit mindestens einer mindestens bifunktionellen organischen Verbindung, die prinzipiell wie die mindestens zweizähnige organische Verbindung für die metallorganischen Gerüstmaterialien verwendet werden kann. Hierbei können gleiche Gerüste sowie die oben genannten funktionellen Gruppen eingesetzt werden. Zusätzlich kann es sich jedoch auch um boronsäurehaltige organische Verbindungen handeln, die gleich oder verschieden zur ersten mindestens zwei Borongruppen aufweisenden Verbindung sein können. Vorzugsweise handelt es sich bei der mindestens bifunktionellen organischen Verbindung um aromatische Di- oder Polyole, oder Di- bzw. Polyboronsäuren. Die COF-Materialien werden somit aus einer ersten organischen Verbindung mindestens zwei Borongruppen aufweisend sowie einer zweiten organischen Verbindung mit mindestens zwei funktionellen Gruppen aufgebaut. Darüber hinaus können weitere Verbindungen die nicht notwendigerweise bi- oder multifunktionell sind, eingesetzt werden.

Das nicht-wässrige organische Lösemittel ist vorzugsweise ein C₁₋₆-Alkanol, Dimethylsulfoxid (DMSO), N,N-Dimethylformamid (DMF), N,N-Diethylformamid (DEF), N,N-Dimethylacetamid (DMAc), Acetonitril, Toluol, Dioxan, Benzol, Chlorbenzol, Methylethylketon (MEK), Pyridin, Tetrahydrofuran (THF), Essigsäureethylester, gegebenenfalls halogeniertes C₁₋₂₀₀-Alkan, Sulfolan, Glykol, N-Methylpyrrolidon (NMP), gamma-Butyrolacton, alicyclische Alkohole wie Cyclohexanol, Ketone, wie Aceton oder Acetylaceton, Cycloketone, wie Cyclohexanon, Sulfolen oder Mischungen davon.

Ein C₁₋₆-Alkanol bezeichnet einen Alkohol mit 1 bis 6 C-Atomen. Beispiele hierfür sind Methanol, Ethanol, n-Propanol, i-Propanol, n-Butanol, i-Butanol, t-Butanol, Pentanol, Hexanol sowie Gemische davon.

Ein gegebenenfalls halogenisiertes C₁₋₂₀₀-Alkan bezeichnet ein Alkan mit 1 bis 200 C-Atomen, wobei ein oder mehrere bis hin zu allen Wasserstoffatomen durch Halogen, vorzugsweise Chlor oder Fluor, insbesondere Chlor, ersetzt sein kann bzw. können. Beispiele hierfür sind Chloroform, Dichlormethan, Tetrachlormethan, Dichlorethan, Hexan, Heptan, Oktan sowie Gemische davon.

Bevorzugte Lösemittel sind DMF, DEF, DMAc und NMP. Besonders bevorzugt ist DMF.

Der Begriff "nicht-wässrig" bezieht sich vorzugsweise auf ein Lösemittel, das einen Höchstwassergehalt von 10 Gew.-%, mehr bevorzugt 5 Gew.-%, weiterhin mehr bevorzugt 1 Gew.-%, weiterhin bevorzugt 0,1 Gew.-%, besonders bevorzugt 0,01 Gew.-% bezogen auf das Gesamtgewicht des Lösemittels nicht überschreitet.

Vorzugsweise beträgt der Gesamthöchstwassergehalt der Flüssigphase des Reaktionsgemisches vor der Umsetzung 10 Gew.-%, mehr bevorzugt 5 Gew.-% und weiterhin mehr bevorzugt 1 Gew.-%. Weiterhin bevorzugt beträgt der Gesamthöchstwassergehalt am Ende der Umsetzung höchstens 3 Gew.-%, mehr bevorzugt höchstens 1 Gew.-% und am meisten bevorzugt höchstens 0,5 Gew.-%.

Die Bestimmung des Wassergehaltes kann anhand der für den Fachmann gängigen Methoden bestimmt werden. Vorzugsweise wird der Wassergehalt nach der Karl Fischer Methode bestimmt (siehe z.B. Römpp Chemie Lexikon Bd. 3 (1995), S. 2161, Georg Thieme Verlag).

Der Begriff "Lösemittel" betrifft reine Lösemittel sowie Gemische von unterschiedlichen Lösemitteln.

Nach der Umsetzung können mehrere Aufarbeitungsschritte folgen, die vorzugsweise unter Ausschluss von Feuchtigkeit durchgeführt werden. Hierbei kann es sich um Filtrier-, Wasch-, Trocknungs-, Extraktions-, Calcinierungs- oder Verformungsschritte handeln.

Insbesondere bevorzugt ist ein Calcinierungsschritt. Die hierbei eingestellte Temperatur beträgt typischerweise mehr als 250°C, bevorzugt 300°C bis 400°C.

Aufgrund des Calcinierungsschrittes können die in den Poren eventuell verbliebenen Ausgangsverbindungen entfernt werden.

Ergänzend oder alternativ hierzu kann die Entfernung von Ausgangsmaterialien aus den Poren des porösen organischen Gerüstmaterials durch die Behandlung des gebildeten Gerüstmaterials mit einem nicht-wässrigen Lösemittel erfolgen. Hierbei wird in einer Art "Extraktionsverfahren" der zu entfernende Ausgangsstoff herausgelöst und gegebenenfalls im Gerüstmaterial durch ein Lösemittelmolekül ersetzt. Diese schonende Methode ist insbesondere geeignet, wenn es sich bei den Ausgangsstoffen um hochsiedende Verbindungen handelt. Die Behandlung erfolgt vorzugsweise mindestens 30 Minuten und kann typischerweise bis zu zwei Tagen durchgeführt werden. Dies kann bei Raumtemperatur oder erhöhter Temperatur geschehen. Vorzugsweise erfolgt dies unter erhöhter Temperatur, beispielsweise bei mindestens 40°C, bevorzugt 60°C. Weiterhin bevorzugt ist die Extraktion bei der Siedetemperatur des eingesetzten Lösemittels (unter Rückfluss).

Die Behandlung kann in einem einfachen Kessel durch Aufschlämmen und Rühren des Gerüstmaterials erfolgen. Es können auch Extraktionsapparaturen wie Soxhlet-Apparaturen, insbesondere technische Extraktionsapparaturen, eingesetzt werden.

Als geeignete Lösemittel können die oben genannten verwendet werden, also beispielsweise C₁₋₆-Alkanol, Dimethylsulfoxid (DMSO), N,N-Dimethylformamid (DMF), N,N-Diethylformamid (DEF), Acetonitril, Toluol, Dioxan, Benzol, Chlorbenzol, Methylethylketon (MEK), Pyridin, Tetrahydrofuran (THF), Essigsäureethylester, gegebenenfalls halogeniertes C₁₋₂₀₀-Alkan, Sulfolan, Glykol, N-Methylpyrrolidon (NMP), gamma-Butyrolacton, alicyclische Alkohole wie Cyclohexanol, Ketone, wie Aceton oder Acetylaceton, Cycloketone, wie Cyclohexanon oder Mischungen davon.

Bevorzugt sind Methanol, Ethanol, Propanol, Aceton, MEK und Mischungen davon.

Ein ganz besonders bevorzugtes Extraktionslösemittel ist Methanol.

Das verwendete Lösemittel zur Extraktion kann gleich oder verschieden zu demjenigen für die Umsetzung der mindestens einen Metallverbindung mit der mindestens einen mindestens zweizähnigen organischen Verbindung sein. Insbesondere ist es bei der "Extraktion" nicht unbedingt erforderlich aber bevorzugt, dass das Lösemittel wasserfrei ist.

Das organische Gerüstmaterial kann pulverförmig bzw. als Agglomerate vorliegen. Das Gerüstmaterial kann als solches verwendet werden oder es wird in einem Formkörper umgewandelt.

Bevorzugte Verfahren zur Herstellung von Formkörpern sind hierbei die Verstrangung oder Tablettierung. Bei der Formkörperherstellung kann das Gerüstmaterial weitere Materialien, wie beispielsweise Binder, Gleitmittel oder andere Additive aufweisen, welche während der Herstellung hinzugesetzt werden. Ebenso ist es denkbar, dass das Gerüstmaterial weitere Bestandteile aufweist, wie zum Beispiel Absorbentien wie Aktivkohle oder dergleichen.

Hinsichtlich der möglichen Geometrien der Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Zur Herstellung dieser Formkörper sind grundsätzlich sämtliche geeigneten Verfahren möglich. Es sind insbesondere folgende Verfahrensführungen bevorzugt:
- Kneten/Kollern des Gerüstmaterials allein oder zusammen mit mindestens einem Bindemittel und/oder mindestens einem Anteigungsmittel und/oder mindestens
   einer Templatverbindung unter Erhalt eines Gemisches; Verformen des erhaltenen Gemisches mittels mindestens einer geeigneten Methode wie beispielsweise Extrudieren; Optional Waschen und/oder Trocknen und/oder Calcinieren des Extrudates; Optional Konfektionieren.
- Tablettieren zusammen mit mindestens einem Bindemittel und/oder anderem Hilfsstoff.
- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat.

Kneten/Kollern und Verformen kann gemäß eines jeden geeigneten Verfahrens erfolgen, wie beispielsweise in Ullmanns Enzyklopädie der Technischen Chemie, 4. Auflage, Band 2, S. 313 ff. (1972) beschrieben.

Beispielsweise kann das Kneten/Kollern und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders bevorzugt werden Pellets und/oder Tabletten hergestellt.

Das Kneten und/oder Verformen kann bei erhöhten Temperaturen wie beispielsweise im Bereich von Raumtemperatur bis 300 °C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Halloysit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran und/oder ein Polyethylenoxid eingesetzt werden.

Als Anteigungsmittel kann unter anderem bevorzugt Wasser oder mindestens ein Alkohol wie beispielsweise ein Monoalkohol mit 1 bis 4 C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 500 °C, bevorzugt im Bereich von 50 bis 500 °C und besonders bevorzugt im Bereich von 100 bis 350 °C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

### Beispiele

### Vergleichsbeispiel 1: Konventionelle Synthese von MOF-5

96,7 g Zn(NO₃)₂*4H₂O und 20,8 g Terephthalsäure werden in 2825 g DEF (Wassergehalt nach K. Fischer 0,02%) suspendiert. Das Reaktionsgemisch (Gesamtwassergehalt nach K. Fischer 1 %) wird 3,5 h bei 130°C gehalten. Am Ende der Reaktionszeit beträgt der Wassergehalt der Reaktionslösung 1,1%. Nach dem Abkühlen wird der Feststoff abfiltriert und mit 4 x 500 ml wasserfreiem Aceton gewaschen. Der Feststoff wird zunächst bei Raumtemperatur im Stickstoffstrom 2 bis 4 Tage vorgetrocknet und anschließend im Vakuumtrockenschrank 16 h evakuiert (≤ 1 mbar).

Vor der Bestimmung der Oberfläche mit N₂ werden die Proben jeweils mehrere Stunden bei 200°C evakuiert.

Folgende Oberflächenwerte wurden bestimmt (nach Langmuir):

| **Probe** | **Oberfläche [m²/g]** |
|---|---|
| A (MH 148) | 2674 |
| B (MH 150) | 3016 |
| C (MH 155) | 2904 |
| D (MH 158) | 3530 |
| E (MH 159) | 2279 |
| F (MH 160) | 3684 |
| G (MH 161) | 2038 |
| H (MH 164) | 2811 |
| **Durchschnitt** | **2867 ± 561** |

### Beispiel 2: Synthese von MOF-5 mit Entfernung von Wasser

Die Synthese aus Beispiel 1 wird wiederholt. Diesmal wird jedoch während der Reaktion entstehende Dämpfe mit einem leichten Stickstoffstrom über eine Destillationsbrücke abgetrennt. Die Mutterlauge nach dem Filtrieren enthält nur ca. 0,5% H₂O. Die weitere Probenbehandlung erfolgt wiederum analog Beispiel 1.

Folgende Oberflächenwerte werden bestimmt (nach Langmuir):

| **Probe** | **Oberfläche [m²/g]** |
|---|---|
| I (MH 166) | 3372 |
| J (MH 167) | 3545 |
| K (MH 170) | 2940 |
| L (MH 183) | 3511 |

| | |
|---|---|
| M (MH 184) | 3628 |
| **Durchschnitt** | **3399 ± 273** |

Die Ergebnisse zeigen, dass aufgrund des Entfernens von Wasser aus dem Reaktionsgemisch ein Gerüstmaterial mit höherer spezifischer Oberfläche erhalten werden kann und sich bei der Wiederholung der Versuche eine geringere Standardabweichung ergibt, was auf eine höhere Reproduzierbarkeit hindeutet.

### Beispiel 3: Synthese von MOF-5 mit Entfernung von Wasser

Die Synthese aus Beispiel 1 wird wiederholt, jedoch diesmal in Gegenwart von 200 g eines frisch aktivierten 3 Å Molsiebes. Die Mutterlauge nach dem Filtrieren enthält nur ca. 0,34 % H₂O. Die weitere Probenbehandlung erfolgt wiederum analog Beispiel 1. Die Probe weite eine N₂-Oberfläche (nach Langmuir) von 3182 m²/g auf.

## Patentansprüche

1. Verfahren zur Herstellung eines porösen metallorganischen gegebenenfalls beschränkten Gerüstmaterials den Schritt enthaltend
- Umsetzung eines Reaktionsgemisches in einer Flüssigphase aus mindestens einer Metallverbindung mit mindestens einer mindestens zweizähnigen organischen Verbindung, die koordinativ an das Metall binden kann, in Gegenwart eines nicht-wässrigen organischen Lösemittels in Anwesenheit und/oder unter Freisetzung von Wasser, wobei die organische Verbindung zumindest zwei Atome jeweils unabhängig voneinander ausgewählt aus der Gruppe bestehend aus Sauerstoff, Schwefel und Stickstoff aufweist, über die die organische Verbindung an das Metall koordinativ binden kann, **dadurch gekennzeichnet, dass** während der Umsetzung der Flüssigphase des Reaktionsgemisches Wasser entzogen wird.

2. Verfahren nach Anspruch 1, **dadurch gekennzeichnet, dass** das Wasser zumindest Kristallwasser der Metallverbindung oder Bestandteil des Lösemittels ist oder unter Abspaltung bei der Umsetzung der mindestens einen Metallverbindung mit der mindestens einen mindestens zweizähnigen Verbindung gebildet wird.

3. Verfahren nach Anspruch 1 oder 2, **dadurch gekennzeichnet, dass** sich die mindestens eine mindestens zweizähnige organische Verbindung von einer Di-, Tri- oder Tetracarbonsäure oder ein Schwefelanalogon davon ableitet.

4. Verfahren zur Herstellung eines porösen Bor-organischen gegebenenfalls beschränkten Gerüstmaterials den Schritt enthaltend
- Umsetzung eines Reaktionsgemisches in einer Flüssigphase aus mindestens einer mindestens zwei Borongruppen aufweisenden Verbindung mit mindestens einer mindestens bifunktionellen organischen Verbindung, die kovalent an eine Borongruppe binden kann, in Gegenwart eines nicht-wässrigen organischen Lösemittels, wobei die mindestens bifunktionelle organische Verbindung zumindest zwei Atome jeweils unabhängig voneinander ausgewählt aus der Gruppe bestehend aus Sauerstoff, Schwefel und Stickstoff aufweist, über die die bifunktionelle organische Verbindung an eine Borongruppe kovalent binden kann, **dadurch gekennzeichnet, dass** während der Umsetzung der Flüssigphase des Reaktionsgemisches Wasser entzogen wird.

5. Verfahren nach einem der Ansprüche 1 bis 4, **dadurch gekennzeichnet, dass** das Wasser dem Reaktionsgemisch destillativ, durch Strippen oder durch Adsorptionsmittel entzogen wird.

6. Verfahren nach einem der Ansprüche 1 bis 5, **dadurch gekennzeichnet, dass** die Umsetzung unter Rühren erfolgt.

7. Verfahren nach einem der Ansprüche 1 bis 6, **dadurch gekennzeichnet, dass** die Umsetzung bei einem Druck von höchstens 2 bar erfolgt.

8. Verfahren nach einem der Ansprüche 1 bis 7, **dadurch gekennzeichnet, dass** die Umsetzung bei einer Reaktionstemperatur im Bereich von 80°C bis 180°C erfolgt.

9. Verfahren nach einem der Ansprüche 1 bis 8, **dadurch gekennzeichnet, dass** das nicht-wässrige organische Lösemittel ein C₁₋₆-Alkanol, DMSO, DMF, DEF, DMAc, Acetonitril, Toluol, Dioxan, Benzol, Chlorbenzol, MEK, Pyridin, THF, Essigsäureethylester, gegebenenfalls halogeniertes C₁₋₂₀₀-Alkan, Sulfolan, Glykol, NMP, γ-Butyrolacton, alicyclische Alkohole, Ketone, Cycloketone, Sulfolen oder eine Mischung davon ist.

10. Verfahren nach einem der Ansprüche 1 bis 9, **dadurch gekennzeichnet, dass** sich ein oder mehrere Aufarbeitungsschritte anschließen, die unter Ausschluss von Feuchtigkeit durchgeführt werden.

## Claims

1. A process for preparing a porous metal organic, if appropriate limited, framework, which comprises the step
- reaction of a reaction mixture in a liquid phase comprising at least one metal compound with at least one at least bidentate organic compound which can be coordinated to the metal, in the presence of a nonaqueous organic solvent in the presence of and/or with liberation of water, with the organic compound having at least two atoms selected independently from the group consisting of oxygen, sulfur and nitrogen via which the organic compound can coordinate to the metal, wherein water is withdrawn from the liquid phase of the reaction mixture during the reaction.

2. The process according to claim 1, wherein the water is at least water of crystallization of the metal compound or a constituent of the solvent or is formed by elimination in the reaction of the at least one metal compound with the at least one at least bidentate compound.

3. The process according to claim 1 or 2, wherein the at least one at least bidentate organic compound is derived from a dicarboxylic, tricarboxylic or tetracarboxylic acid or a sulfur analogue thereof.

4. A process for preparing a porous organoboron, if appropriate limited, framework, which comprises the step
- reaction of a reaction mixture in a liquid phase comprising at least one compound having at least two boronic groups with at least one at least bifunctional organic compound which can be covalently bound to a boronic group, in the presence of a nonaqueous organic solvent, with the at least bifunctional organic compound having at least two atoms selected independently from the group consisting of oxygen, sulfur and nitrogen via which the bifunctional organic compound can be covalently bound to a boronic group, wherein water is withdrawn from the liquid phase of the reaction mixture during the reaction.

5. The process according to any of claims 1 to 4, wherein the water is withdrawn from the reaction mixture by distillation, by stripping or by means of adsorbents.

6. The process according to any of claims 1 to 5, wherein the reaction is carried out with stirring.

7. The process according to any of claims 1 to 6, wherein the reaction is carried out at a pressure of not more than 2 bar.

8. The process according to any of claims 1 to 7, wherein the reaction is carried out at a reaction temperature in the range from 80°C to 180°C.

9. The process according to any of claims 1 to 8, wherein the nonaqueous organic solvent is a C₁₋₆-alkanol, DMSO, DMF, DEF, DMAc, acetonitrile, toluene, dioxane, benzene, chlorobenzene, MEK, pyridine, THF, ethyl acetate, optionally halogenated C₁₋₂₀₀-alkane, sulfolane, glycol, NMP, γ-butyrolactone, alicyclic alcohols, ketones, cycloketones, sulfolene or a mixture thereof.

10. The process according to any of claims 1 to 9, wherein one or more work-up steps which are carried out with exclusion of moisture follow.

## Revendications

1. Procédé de fabrication d'un matériau de squelette métallo-organique poreux éventuellement restreint, contenant l'étape de :
- réaction d'un mélange réactionnel en phase liquide constitué d'au moins un composé métallique avec au moins un composé organique au moins bidentate, qui peut se lier coordinativement au métal, en présence d'un solvant organique non aqueux, en présence et/ou avec libération d'eau, le composé organique comportant au moins deux atomes à chaque fois choisis indépendamment les uns des autres dans le groupe constitué de l'oxygène, du soufre et de l'azote, par lesquels le composé organique peut se lier coordinativement au métal, **caractérisé en ce que** de l'eau est extraite pendant la réaction de la phase liquide du mélange réactionnel.

2. Procédé selon la revendication 1, **caractérisé en ce que** l'eau est au moins l'eau de cristallisation du composé métallique ou un constituant du solvant, ou est formée par clivage lors de la réaction du ou des composés métalliques avec le ou les composés au moins bidentates.

3. Procédé selon la revendication 1 ou 2, **caractérisé en ce que** le ou les composés organiques au moins bidentates dérivent d'un acide di-, tri- ou tétracarboxylique ou d'un analogue de soufre.

4. Procédé de fabrication d'un matériau de squelette boro-organique poreux éventuellement restreint, contenant l'étape de :
- réaction d'un mélange réactionnel en phase liquide constitué d'au moins un composé comportant au moins deux groupes bore avec au moins un composé organique au moins bifonctionnel qui peut se lier par une liaison covalente à un groupe bore, en présence d'un solvant organique non aqueux, le composé organique au moins bifonctionnel comportant au moins deux atomes à chaque fois choisis indépendamment les uns des autres dans le groupe constitué de l'oxygène, du soufre et de l'azote, par lesquels le composé organique bifonctionnel peut se lier par une liaison covalente à un groupe bore, **caractérisé en ce que** de l'eau est extraite pendant la réaction de la phase liquide du mélange réactionnel.

5. Procédé selon l'une quelconque des revendications 1 à 4, **caractérisé en ce que** l'eau est extraite du mélange réactionnel par distillation, par extraction ou par adsorption.

6. Procédé selon l'une quelconque des revendications 1 à 5, **caractérisé en ce que** la réaction a lieu sous agitation.

7. Procédé selon l'une quelconque des revendications 1 à 6, **caractérisé en ce que** la réaction a lieu à une pression d'au plus 2 bar.

8. Procédé selon l'une quelconque des revendications 1 à 7, **caractérisé en ce que** la réaction a lieu à une température de réaction dans la plage allant de 80 °C à 180 °C.

9. Procédé selon l'une quelconque des revendications 1 à 8, **caractérisé en ce que** le solvant organique non aqueux est un alcanol en C₁₋₆, le DMSO, le DMF, le DEF, le DMAc, l'acétonitrile, le toluène, le dioxane, le benzène, le chlorobenzène, la MEC, la pyridine, le THF, l'ester éthylique de l'acide acétique, un alcane en C₁₋₂₀₀ éventuellement halogéné, le sulfolane, le glycol, la NMP, la γ-butyrolactone, des alcools alicycliques, des cétones, des cyclocétones, le sulfolène ou un de leurs mélanges.

10. Procédé selon l'une quelconque des revendications 1 à 9, **caractérisé en ce qu'**une ou plusieurs étapes de traitement s'ensuivent, qui sont réalisées avec exclusion de l'humidité.
